# EUROPEAN PATENT APPLICATION

(11) **EP 2 915 765 A1**
(43) Date of publication of application: **09.09.2015**
(21) Application number: 15157347.4
(22) Date of filing: 03.03.2015
(51) Int. Cl.: B65G 69/00, F16F 1/44, F16F 3/08, B60R 19/02

(54) **Bumper device for industrial vehicles and/or loading/unloading bays**

(30) Priority: 04.03.2014 ES 201430285 U
(71) Applicant: Bailon Sanz, Manuel, 50010 Zargoza (ES)
(72) Inventor: Bailon Sanz, Manuel, 50010 Zargoza (ES)
(74) Representative: Ungria López, Javier

(57) **Abstract**

Bumper device for industrial vehicles and/or loading/unloading bays, being the type of bumpers that are mounted on the rear side part of the platform in industrial vehicles and are mounted on the sides of loading/unloading bays at the height of the positioning place of the platform of the industrial vehicles that are going to load or unload, such that the protective device (3) comprising a pair of housings with the interposition of at least one pair of rubber dampers (4) therebetween, wherein a first housing (6) is associated with a second housing (5), through the rubber dampers (4) and the second housing (5) is fixed to the rear side part of the platform of an industrial vehicle (1) or to the lower side structure of the opening of the loading/unloading bay (2), and the rubber dampers (4) are provided with an axial threaded central hole (12).

## Description

### OBJECT OF THE INVENTION

The following Utility Model, as stated in the title of this specification, refers to a bumper device for industrial vehicles and/or loading/unloading bays, being the type of bumper devices which are mounted on the rear side part of the platform of industrial vehicles and on the sides of the loading/unloading bays in order to avoid breakages both in the elements mounted on the rear side part of industrial vehicles, such as the indicators, as well as in the structure of the sides of the opening with regard to the loading/unloading bays.

Thus, the bumper device presented can be mounted on both industrial vehicles and the loading/unloading bays, so the best option, logically, is that both have the bumper device for achieving a greater efficacy as a result of the power of absorption and buffering thereof, which is favourable when metal comes against metal.

### TECHNICAL FIELD

Herein a bumper device is described for industrial vehicles and/or loading and unloading bays existing in many companies, warehouses and the like, which device is mounted on the rear side part of the platform of industrial vehicles and on the lower side structure of the opening of the loading/unloading bay at a similar height to that of the mounting place in platforms for industrial vehicles, so that both are in correspondence when the industrial vehicle manoeuvres in reverse to approach the loading/unloading bay.

### BACKGROUND OF THE INVENTION

As it is known, industrial vehicles, such as trailers and semitrailers carry a wide variety of goods, so that very frequent loading and unloading operations take place on the cited loading/unloading bays of numerous companies and warehouses, where the driver must position the rear end of the vehicle to perform the loading/unloading operation.

This operation of the vehicle's approach has a number of drawbacks, since, as it's done in "reverse", often good vision cannot be had and, despite the expertise of the driver, there may occur impacts of the platform against the structure of the sides of the opening defining the loading/unloading bay space, which impact could cause damage or breakage to the vehicle's rear side elements, such as indicators, or on the side structure of the bay itself, with the economic cost that this represents.

So, essentially, the impacts occur on the rear side part of the vehicle whilst trying to position it in the opening of the loading/unloading bay and, although the approach manoeuvre is made very slowly, such impacts may cause the damage of an element with the economic cost that this represents.

In order to overcome these drawbacks, various means to try to protect the functional elements mounted, essentially on the rear side part of industrial vehicles, are known, and thus reference can be made to the existence of profiles in inverted "U" that are coupled to both rear sides of the platform and admit a rotating cylindrical rubber body, which is the impact bumper and absorbing means and, accordingly, it has a minimum permissible deviation.

It is also known that there are means based on a pair of steel plates, one on each rear side of the platform, with the interposition of at least one plastic body; however, the drawback with this means is that the plastic body has insufficient bumping and absorption of possible impacts and also is easily broken.

As for the bumper means for the structure of the sides of the opening of the loading/unloading bay, they are often based on similar means to those previously mentioned, that is, the mounting of plastic bodies and respective steel plates or the mere presence of metal or rubber protective means lacking buffering ability, so that they lose their effect.

In short, these means have the drawback that they have practically no impact buffering and absorption capacity so they do not act as a bumper means and the damage of functional elements often occurs in the case of an impact occurring.

### SUMMARY OF THE INVENTION

Herein, a bumper device for industrial vehicles and/or loading/unloading bays is described, through which the solution of the disadvantages described above is addressed, and thus the bumper device is of the type of bumper means that are mounted on the rear side part of the platform in industrial vehicles and are mounted on the lower side of the opening structure on the loading/unloading bay at the height of the positioning place of the platform of the industrial vehicles that are going to load or unload and which bumper means are based on independent bodies of plastic material associated with steel plates. The bumper device of the present invention comprises a pair of housings with the interposition of at least one pair of rubber dampers therebetween, so that:
➢ a first housing is associated to a second housing, through the rubber dampers, the first housing including first attaching means for the rubber dampers and is provided with a slight displacement;
➢ a second housing is fixed to the rear side of the platform of an industrial vehicle or to the side structure of the opening of the loading/unloading bay through a second attaching means;
➢ the rubber dampers are provided with an axial threaded central hole and are fixed to the first housing through the first attaching means and the second housing by second attaching means at both ends, and with its flexible central part; and,
so that when a pressure is exerted over one of the housings (5,6), the housings (5,6) are approaching each other and the rubber dampers are warped until the rubber dampers counterbalance the pressure or until the housings reach a displacement limit.

Thus, the first open box-like housing, coupled to the second housing which is fixed to the platform of an industrial vehicle, is coupled to at least one pair of first attaching means defined by threaded elements, in which the rubber dampers are attached, and at least one threaded stud which is enfolded by a spring.

Moreover, in a practical mode of carrying out the invention, to the first open box-like housing, coupled to the second housing which is fixed to the platform of the industrial vehicle, are coupled two threaded attaching elements for each of the rubber dampers and two studs enfolded by two springs, the springs being flush with the pair of rubber dampers.

Thus, the second open box-like housing is fixed to the platform of an industrial vehicle through second attaching means defined by a pair of first fixing screws, that likewise are screwed to the axial threaded central hole of the pair of rubber dampers and by respective threaded nuts to the pair of studs.

Also, in a different practical mode of carrying out the invention, the second housing of the bumper device, which is fixed to the industrial vehicle, has respective holes in its four base corners for fixing to the rear platform by means of respective screws passing through them.

Moreover, the second open box-like housing of the bumper device, which is coupled at its base to the lower side structure of the opening of the loading/unloading bay, has a flap-like extension on one side of its base, and it has an orthogonal flange on its opposite side, both provided with respective pairs of through holes.

In a practical mode of carrying out the invention, the first housing, coupled to the second housing which is coupled to the lower side structure of the opening of the loading/unloading bay, includes three pairs of threaded elements in which respective rubber dampers are fixed, and has an "U"-shaped cross section with its legs abutting the larger sides of the second housing.

Also, the first housing, coupled to the second housing that is coupled to the lower side structure of the opening of the loading/unloading bay, and that has three pairs of rubber dampers attached thereto, is coupled to the second housing when fixing the aforementioned three pairs of rubber dampers to its base through a second attaching means defined by second screws with their heads flush with the outer surface of its base.

The second housing of the bumper device mounted on the loading/unloading bay has, in at least, one of the sides of the base adjacent to the flap-like extension, at least one lug provided with at least one through hole for its fixing by the corresponding screw.

Moreover, on the central top part of the side wall of the second housing, coupled to the bumper device that is coupled to the lower side structure of the opening of the loading/unloading bay, with respect to the flap like extension it presents, the second housing has a notch in which a guide and retaining element for the first housing will be accommodated.

The first housing of the bumper device mounted on the lower side structure of the opening of the loading/unloading bay has a first access hole to a second hole of the second housing's base for the positioning of a fixing element, of the aforementioned second housing.

In a particular embodiment of the invention, the first housing and the second housing are made of steel or stainless steel.

In order to complement the description that is going to be carried out and with the purpose of facilitating the understanding of the characteristics of the invention, the present specification is accompanied by a set of drawings wherein their figures represent, by way of a non-limiting example, the most characteristic features of the invention.

### BRIEF DESCRIPTION OF THE DRAWINGS

Figure 1 shows a side elevation view of a bumper device for industrial vehicles, wherein can be seen how it comprises a pair of housings between which at least one pair of rubber dampers is arranged, so that a first housing is coupled to a second housing with the possibility of displacement.
Figure 2 shows a cross section along a longitudinal section of the first housing on the pair of housings in the previous figure, wherein a pair of rubber dampers and a threaded stud enfolded by a spring can be seen.
Figure 3 shows a plan view of the first housing of the previous figure, wherein a pair of rubber dampers and a pair of threaded studs which are enfolded by the corresponding spring can be seen.
Figure 4 shows a plan view of a bumper device to be mounted in a loading/unloading bay, equivalent to the bumper device for industrial vehicles in Figure 1, being based, also, on a pair of housings between which at least one pair of rubber dampers is provided, so that a second housing is fixed to the lower side structure of the opening loading/unloading bay and the first housing is coupled to it with the possibility of displacement.
Figure 5 shows a side elevation view of the bumper device to be mounted in a loading/unloading bay, so that a second housing will be fixed to the lower side structure of the opening thereof and the first housing may move with respect to it perfectly guided, so that the second housing which is fixed to the side structure of the opening has a flap on one side of its base and on the opposite it has an orthogonal flange.
Figure 6 shows a sectional view according to section I-I of the previous figure, in which can be seen how the first housing is perfectly guided with respect to the second housing, both keeping the interposition of the corresponding rubber dampers.
Figure 7 shows a schematic view of a loading/unloading bay, wherein can be seen how the bumper devices are mounted on the lower side of the structure of the opening.
Figure 8 shows a schematic rear view of an industrial vehicle, wherein can be seen how the bumper devices are mounted on the side part of the rear platform.
Figure 9 shows a sectional view of the first housing of the bumper device to be mounted on the rear side part of an industrial vehicle, wherein a threaded stud and the two threaded elements coupled to it in which the respective rubber dampers will be screw attached can be seen.
Figure 10 shows a sectional view of the first housing of the bumper device to be mounted on the side structure of the opening of the loading/unloading bay, wherein two threaded elements, of the six that are included, coupled to it in which the respective rubber dampers will be screw attached can be seen.
Figure 11 shows a sectional view of the second housing of the bumper device to be mounted on the side structure of the opening of the loading/unloading bay, wherein two of the second screws, of the six that are included, by which the respective rubber dampers will be screw attached and also how their heads are integrated into the structure of the housing base can be seen.

### DESCRIPTION OF A PREFERRED EMBODIMENT OUT THE INVENTION.

In view of the mentioned figures and according to the numbering used, it can be seen how the bumper device 3 comprises a pair of housings with the interposition between them of at least one pair of rubber dampers 4 so that a first housing 6 includes first attaching means for the rubber dampers 4 and the second housing 5 is fixed to the rear side of the platform 9 of an industrial vehicle 1 or to the side structure of the opening of the loading/unloading bay 2 through second attaching means.

To do this, the rubber dampers 4 are provided with an axial threaded central hole 12 and are fixed to the first housing 6 through their first attaching means defined by threaded elements 16 and the second housing 5 through second attaching means.

Thus, the rubber dampers 4 are attached at one of their ends to the first housing 6 and at its other end to the second housing 5, while its central part is provided with adequate flexibility to buffer and absorb the displacements of the first housing 6 with respect to the fixed second housing 5.

Thus, to the first open box-like housing 6, coupled to the second housing 5 which is fixed to the platform of an industrial vehicle 1, at least one pair of first attaching means, defined by threaded elements 16, and at least one threaded stud 7 enfolded by a spring 8 are coupled, so that in a practical mode of carrying out the invention to the first housing 6 on the bumper device 3 mounted on an industrial vehicle 1, two threaded fastening elements 16 of each rubber dampers 4 and two studs 7 enfolded by two springs 8 are coupled, being the springs 8 flush with the pair of rubber dampers 4.

Thus, the second open box-like housing 5 of the bumper device 3 mounted on an industrial vehicle 1, is coupled, at its base, to the sides of the rear platform 9 of the same, through the second attaching means defined by first screws 10, which are also screwed to the threaded axial central hole 12 of the pair of rubber dampers 4 and respective nuts 11 screwed to the pair of studs 7.

Also, in a different practical mode of carrying out the invention, the second housing 5 of the bumper device 3 which is fixed to the industrial vehicle 1, has in each of its four base corners, holes 24 for fixing to the rear platform 9 by means of respective through screws, so that said fixing will be added to that previously described for the first screws 10 and the nuts 11.

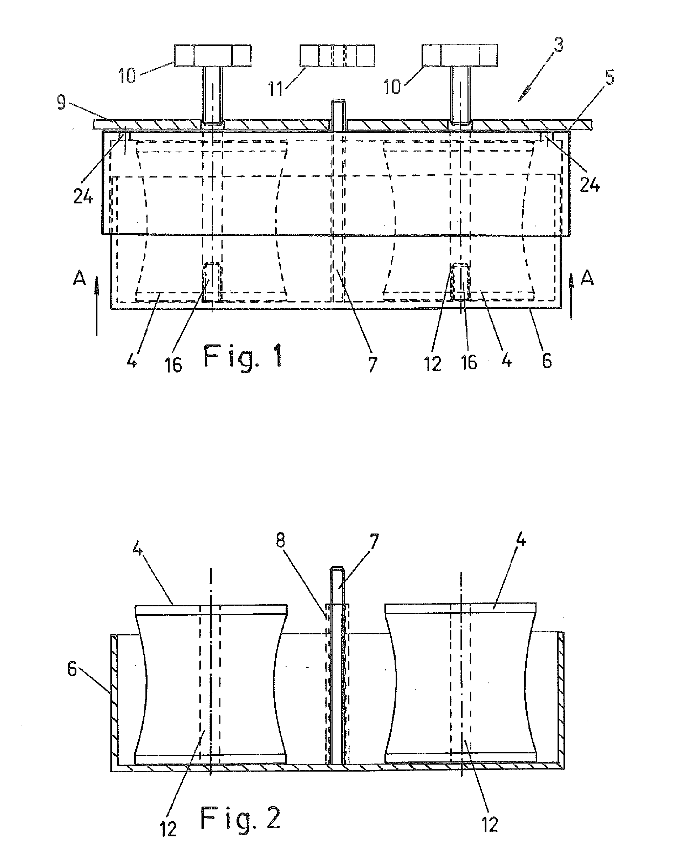

Thus, when observing the Figures 1 to 3, 8 and 9, it can be seen how the bumper device 3 mounted on the rear side of the platform of an industrial vehicle 1 has two threaded elements 16 in its first housing 6 in which the two rubber dampers 4 at one of their ends and two studs 7 which are enfolded by respective springs 8 are attached, said springs 8 being flush with the rubber dampers 4, while the second housing 5 will be fixed to the platform 9 of the industrial vehicle 1 coupling with the first housing 6, to which the second housing 5 is fixed by first screws 10 which are also attached to the pair of rubber dampers 4 and a pair of nuts 11 that screw into the threaded studs 7.

Also, to this attachment to the rear platform 9 can be added an additional attachment, as we have indicated, by means of respective through screws for the holes 24 of the corners of the second housing 5 and respective holes on the rear platform 9 for making the attachment.

Thus, in the "reverse" manoeuvre of the industrial vehicle 1 to be positioned in the opening of the structure of a loading/unloading bay 2, the bumper device 3 is the element that firstly will bump against the same through the first housing 6 and, since it is provided with a slight displacement, it is able to buffer and absorb the impact, without causing any damage.

Moreover, the second housing 5 of the bumper device 3 mounted on the lower side structure of the opening of the loading/unloading bay 2 is made, likewise, as an open box, and the same is coupled at its base, and has, on one of its sides a flap-like extension 13 and, on its opposite side, an orthogonal flange 21 in which a first and second pair of through holes 14 and 22, respectively, have been made.

Also, according to one practical mode of carrying out the invention, the first housing 6 of the bumper device 3 mounted on the lower side part of the opening structure of a loading/ unloading bay 2 includes three pairs of threaded elements 16 in which respective rubber dampers 4 are fixed and the same has a "U"-shaped cross section with its legs abutting the larger sides of the second housing 5.

Thus, the first housing 6 of the bumper device 3 mounted on the lower side part of the opening structure of a loading/unloading bay 2, with the three pairs of rubber dampers 4 fixed thereto, is coupled to the second housing 5 when fixing the aforementioned three pairs of rubber dampers 4 to its base through second attaching means defined by second screws 17 with their heads flush with the outer surface of its base, allowing its perfect positioning against the corresponding mounted structure and the said second screws 17 remaining unseen.

Also the second housing 6 of the bumper device 3 mounted on a loading/unloading bay 2 includes, at least, one of the lateral sides of the flap like extension 13 of, at least, one lug 23 with corresponding through hole/s.

In accordance with the structure described, the bumper device 3 in its mounting on the corresponding industrial vehicle 1 will act so that, once the rubber dampers 4 are attached to the first housing 6, the second housing 5 will be positioned against the platform 9 on its mounting point and the first through screws 10 will be placed through respective holes of the same, and they will be screwed into the threaded axial central hole 12 of the rubber dampers 4 producing the fastening of both housings 5 and 6, and the first housing 6 being provided with a light displacement, according to arrow A of Figure 1, acting as a bumper.

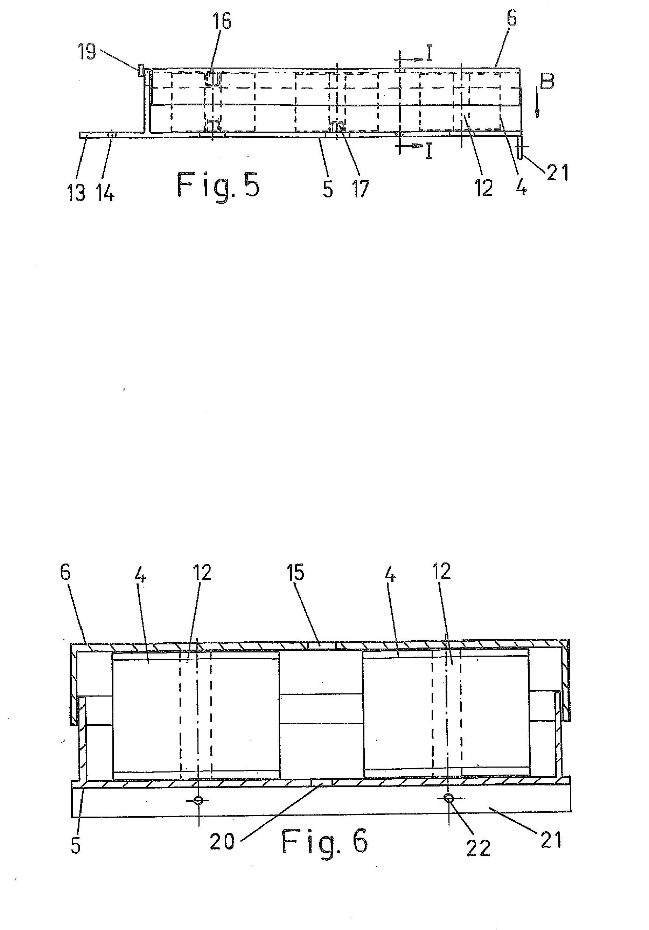

With regard to the bumper device 3 mounted in a loading/unloading bay 2, firstly the rubber dampers 4 will be fixed to the first housing 6 by the threaded elements 16 and, subsequently, the second housing 5 will be attached by means of the second screws 17, which will screw into the threaded axial central holes 12 , leaving the bumper device ready to be assembled in a loading/unloading bay 2 and with the first housing 6 being provided with a slight displacement, according to the arrow B in Figure 5.

Moreover, the second housing of the bumper device 3 mounted on the loading/unloading bay 2 in, at least, one of the sides of the base adjacent to the flap-like extension 13 has, at least, one lug 23 provided with, at least, one through hole for its fastening by the corresponding screw.

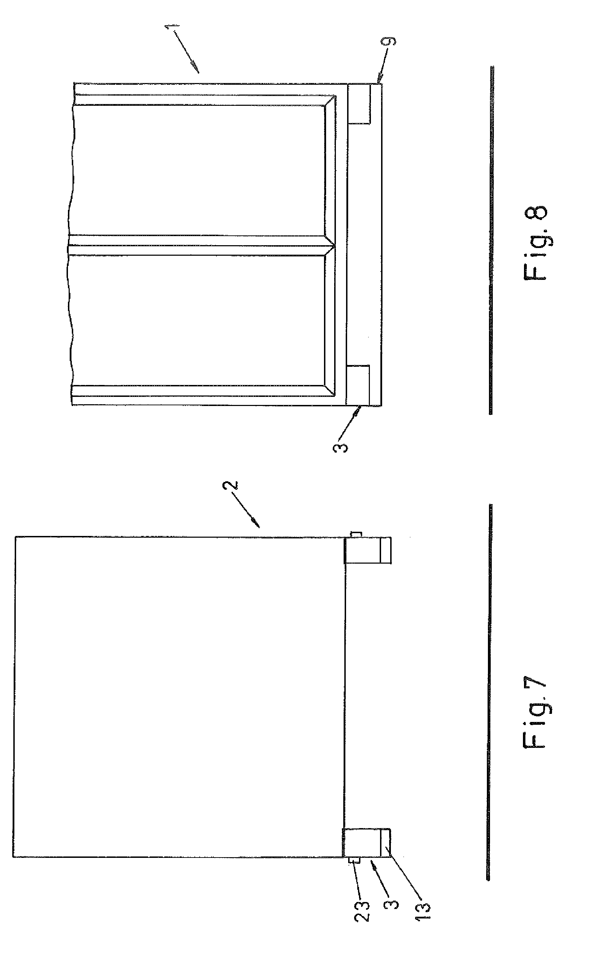

Thus, when mounting the bumper device 3 on a loading/unloading bay 2, as shown in Figure 7 of the drawings, it will be placed so that the second housing 5 abuts against its base with the orthogonal flange 21 being arranged on the floor of the industrial unit and will be fixed by means of the corresponding threaded through screws for the first and second pair of through holes 14 and 22 respectively, as well as by the lugs 23.

In this way, logically, the fixing of the first housing 5 of the protective device mounted in the lower side structure of the opening of the loading/unloading bay 2, can be done in different ways, and also, in another practical mode of carrying out the invention, this is made by the fact of the first housing 6 having one first access hole 15 to a second hole 20 of the second housing 5 in order to be able to position a fastening element giving it greater security in order to avoid possible thefts of the device.

On the other hand, in the central upper part of the side wall of the second housing 5 provided with a flap 13 a notch is provided in which a guide element 19 is placed coupled to the first housing 6 of the protective device 3 relative to the lower side structure of the opening of the loading/unloading bay 2, so that with this a higher rigidity of the bumper device is obtained.

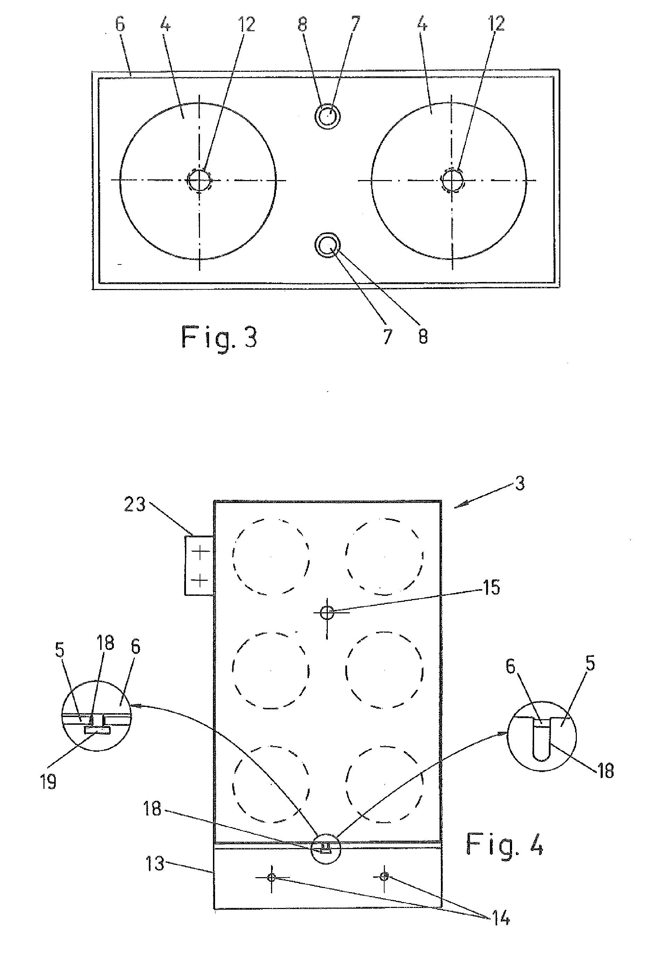

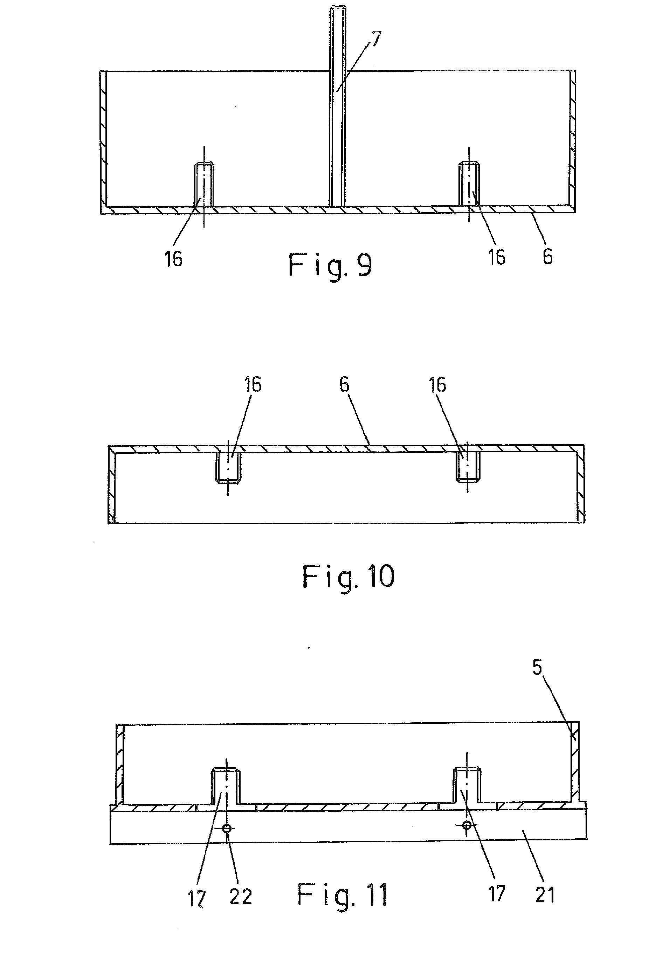

With reference to the Figures 4, 5 and 6, it can be observed how the bumper device 3 mounted on the lower side structure of the opening of the loading/unloading bay 2, in a practical mode for carrying out the invention, includes six rubber dampers 4, so that first housing 6 includes its corresponding six threaded elements 16 for its attachment and six second screws 17 for the attachment of the respective rubber dampers 4 to the second housing 5, with their heads being flush with the base of the bay, as shown in Figure 11 in more detail.

In Figure 4 of the drawings, it can be seen how the side of the second housing 5 from which the flap 13 extends, relative to the protective device 3 mounted on the lower side part of a loading/unloading bay 2, has a notch 18 in its upper central part, in which fits a guide and retaining element 19 which is coupled to the first housing 6, facilitating its movement and preventing movement towards the exterior.

Thus, when mounting both bumper devices 3 in the lower side structure of the opening of the loading/unloading bay 2, as shown in Figure 7 of the drawings, the bay is protected from possible impacts that could affect its structure, so that if they are combined with bumper devices 3 mounted in industrial vehicle-mounted 1, as shown in Figure 8, the protection of both will be achieved.

Logically, the bumper devices 3 could have a variable number of rubber dampers 4, as ultimately it concerns obtaining a means that gives absorption to the possible impacts that occur when industrial vehicles reverse into the opening of loading/unloading bays that exist in many companies and warehouses, even more in dealing with devices in which iron comes against iron and minimum friction is produced, and which provides a buffering effect.

In a particular embodiment of the invention for any one of the above mentioned embodiments, the first housing and the second housing are made of steel or stainless steel.

## Claims

1. **Bumper device for industrial vehicles and/or loading/unloading bays**, **characterised in that** the bumper device (3) comprises a pair of housings (5,6) with the interposition of at least one pair of rubber dampers (4) therebetween, so that:
➢ a first housing (6) is coupled to a second housing (5) through the rubber dampers (4), it includes first attaching means for the rubber dampers (4);
➢ a second housing (5) is fixed to the rear side part of the platform of an industrial vehicle (1) or to the lower side structure of the opening of the loading/unloading bay (2) through second attaching means, and
➢ the rubber dampers (4) are provided with an axial threaded central hole (12) and are fixed to the first housing (6) through the first attaching means and to the second housing (5) through the second attaching means, at both ends, and with their flexible central part.
so that when a pressure is exerted over one of the housings (5,6), the housings (5,6) are approaching each other and the rubber dampers are warped until the rubber dampers counterbalance the pressure or until the housings reach a displacement limit.

2. **Bumper device for industrial vehicles and/or loading/unloading bays,** according to claim 1, **characterised in that** the first open box-like housing (6) includes, at least, a pair of first attaching means defined by threaded elements (16) and, at least, a threaded stud (7) which is enfolded by a spring (8).

3. **Bumper device for industrial vehicles and/or loading/unloading bays,** according to claims 1 and 2, **characterised in that** the first open box-like housing (6) includes two threaded elements (16) for fixing each of the two rubber dampers (4) and two studs (7) enfolded by two separated springs (8), wherein the springs (8) are flush with the pair of rubber dampers (4).

4. **Bumper device for industrial vehicles and/or loading/unloading bays,** according to the previous claims, **characterised in that** the second open box-like housing (5) is fixed to the platform (9) of an industrial vehicle (1), through attaching means defined by a pair of fixing first screws (10), which likewise are screwed to the threaded axial central hole (12) of the pair of rubber dampers (4) and by respective threaded nuts (11) screwed to the pair of studs (7).

5. **Bumper device for industrial vehicles and/or loading/unloading bays,** according to claim 1, **characterised in that** the second housing (5) of the bumper device (3) that is fixed to the industrial vehicle (1), has two through holes (24) in its four base corners for fixing to the rear platform by means of respective through screws.

6. **Bumper device for industrial vehicles and/or loading/unloading bays,** according to claim 1, **characterised in that** the second open box-like housing (5) of the bumper device that is coupled, at its base, to the lower side structure of the opening of the loading/unloading bay (2), has a flap like extension (13) on one of the sides of its base, and an orthogonal flange on the opposite side.

7. **Bumper device for industrial vehicles and/or loading/unloading bays,** according to claim 1, **characterised in that** the first housing (6) of the bumper device mounted in the loading and unloading bay (2), includes three pairs of threaded elements (16) where the respective rubber dampers (4) are fixed, and has a "U"-shaped cross section with its legs abutting against the larger sides of the second housing (5).

8. **Bumper device for industrial vehicles and/or loading/unloading bays,** according to claims 1 and 6, **characterised in that** the first housing (6) with the three pairs of rubber dampers (4) fixed to it is coupled to the second housing (5) by fixing the aforementioned three pairs of rubber dampers (4) to its base by second attaching means defined by second screws (17) with their heads being flush to the exterior surface of its base.

9. **Bumper device for industrial vehicles and/or loading/unloading bays,** according to the claims 1 and 5, **characterised in that** the second housing (5) of the bumper device mounted in the loading/unloading bay (2) in, at least, one of the sides of the base adjacent to the flap like extension (13) has, at least, one lug (23).

10. **Bumper device for industrial vehicles and/or loading/unloading bays,** according to claims 1 and 5, **characterised in that** a recess is provided in the central upper part of the side wall of the second housing (5) adjacent to the flap like extension (13), in which there is a guide element (19) coupled to the first housing (6) of the bumper device (3) mounted in the loading/unloading bay (2).

11. **Bumper device for industrial vehicles and/or loading/unloading bays,** according to claims 1 and 5, **characterised in that** the first housing (6) of the bumper device (3) mounted in the loading/unloading bay (2) has a first access hole (15) to a second hole (20) of the second housing for positioning a fixing element.
